# EUROPEAN PATENT SPECIFICATION

(11) **EP 3 957 931 B1**
(45) Date of publication and mention of the grant of the patent: **09.10.2024**
(21) Application number: 20805324.9
(22) Date of filing: 31.01.2020
(51) Int. Cl.: F25B 13/00, F25B 1/00, F25B 49/02

(54) **REFRIGERATION APPARATUS**
KÜHLGERÄT
APPAREIL DE RÉFRIGÉRATION

(30) Priority: 15.05.2019 JP 2019092450
(43) Date of publication of application: 23.02.2022
(73) Proprietor: DAIKIN INDUSTRIES, LTD., Osaka-Shi, Osaka 530-0001 (JP)
(72) Inventor: TAKEGAMI, Masaaki, Osaka-shi, Osaka 530-8323 (JP); UENO, Akitoshi, Osaka-shi, Osaka 530-8323 (JP); HORITA, Takuya, Osaka-shi, Osaka 530-8323 (JP); KIMURA, Naoto, Osaka-shi, Osaka 530-8323 (JP)
(74) Representative: Hoffmann Eitle
(86) International application number: PCT/JP2020/003764
(87) International publication number: WO 2020/230376

(56) References cited:
- EP-A1- 1 764 568
- EP-A1- 1 906 115
- EP-A1- 2 402 681
- EP-A1- 3 136 023
- EP-A1- 3 480 533
- EP-A2- 0 837 291
- JP-A- 2004 257 722
- JP-A- 2008 275 214
- JP-A- 2009 063 220

## Description

### TECHNICAL FIELD

The present disclosure relates to a refrigeration apparatus-use unit, a heat source unit, a utilization unit, and a refrigeration apparatus.

### BACKGROUND ART

Patent Literature 1 discloses a refrigeration apparatus that includes a refrigerant circuit including a compressor, a heat source-side heat exchanger, an expansion valve, and a utilization-side heat exchanger. The refrigerant circuit is configured to perform a refrigeration cycle. In the refrigeration cycle, the compressor compresses a refrigerant and the heat source-side heat exchanger causes the refrigerant to dissipate heat. Thereafter, the expansion valve decompresses the resultant high-pressure refrigerant, and the utilization-side heat exchanger evaporates the high-pressure refrigerant.

Patent literature 2 discloses a refrigerant circuit including expansion valves.

Document EP 3 480 533 A1 discloses a refrigeration apparatus comprising a refrigerant circuit including a compression unit, a utilization-side heat exchanger, and a heat source-side heat exchanger, and a refrigeration apparatus-use unit comprising: at least one high-pressure flow path through which the high-pressure refrigerant in the refrigerant circuit flows; and a valve mechanism connected to the high pressure flow path, the valve mechanism comprising an expansion valve, wherein the valve mechanism includes: a valve body; a first flow path; a second flow path configured to communicate with the first flow path, the high-pressure flow path includes a regulation mechanism configured to permit the refrigerant to flow through the second flow path and first flow path of the valve mechanism in this order and to prohibit the refrigerant from flowing through the first flow path and the second flow path in this order, the regulation mechanism comprises a check valve, the valve mechanism and the regulation mechanism are connected in this order from the upstream side toward the downstream side, and the high-pressure flow path causes the high-pressure refrigerant to always flow through the second flow path and first flow path of the valve mechanism in this order, and wherein the refrigerant circuit includes a switching unit.

### CITATION LIST

### PATENT LITERATURE

Patent Literature 1: JP 2004-044921 A
Patent literature 2 : EP 1 906 115

### SUMMARY OF THE INVENTION

### <Technical Problem>

Some refrigeration apparatuses, such as the refrigeration apparatus disclosed in Patent Literature 1, perform a refrigeration cycle in which a pressure above a critical pressure is applied to a refrigerant such as carbon dioxide. In this case, a pressure applied to a high-pressure refrigerant flowing through a valve mechanism such as an expansion valve is higher than that in a typical refrigeration cycle in a subcritical region.

A valve mechanism, such as an expansion valve, has a valve body that closes an end of a flow path to close the flow path. In addition, the valve mechanism adjusts a pressure reducing amount in accordance with a length of a clearance between the valve body and the end of the flow path. Therefore, the valve mechanism may malfunction if a pressure of a refrigerant, which is above a supercritical pressure, acts on the valve body to open the valve body.

An object of the present disclosure is to suppress occurrence of a malfunction in a valve mechanism.

### <Solution to Problem>

The invention is defined in the appended claims.

According to the invention, there is substantially no possibility that the high-pressure refrigerant flows through the first flow path (81) and second flow path (82) of the valve mechanism (14a, 14b, 63a, 63b, 90) in this order. This configuration therefore avoids a situation in which the pressure of the high-pressure refrigerant, which is above the supercritical pressure, acts on the valve body (80, 95) to open the valve body (80, 95).

The configuration according to the invention avoids a situation in which the pressure of the high-pressure refrigerant, which is above the supercritical pressure, acts on a valve body (80) of the expansion valve (14a, 14b, 63a, 63b) to increase an opening degree of the expansion valve (14a, 14b, 63a, 63b).

According to the invention, the regulation mechanism causes the high-pressure refrigerant to always flow through the second flow path (82) and first flow path (81) of the valve mechanism (14a, 14b, 63a, 63b) in this order.

According to the invention, in the first refrigeration cycle, the high-pressure refrigerant flows through one of the two high-pressure flow paths (I1, I2, O2, O3). The high-pressure refrigerant flows through the second flow path (82) and first flow path (81) of the valve mechanism (14a, 14b, 63a, 63b) in this order. In the second refrigeration cycle, the high-pressure refrigerant flows through the other high-pressure flow path (I1, I2, O2, O3). The high-pressure refrigerant flows through the second flow path (82) and first flow path (81) of the valve mechanism (14a, 14b, 63a, 63b) in this order.

The invention is defined in the appended claims.

### BRIEF DESCRIPTION OF THE DRAWINGS

FIG. 1 is a diagram of a piping system in a refrigeration apparatus according to an embodiment.
FIG. 2(A) is a longitudinal sectional view of a schematic configuration of an expansion valve at a closed position. FIG. 2(B) is a longitudinal sectional view of a schematic configuration of the expansion valve at an open position.
FIG. 3 is a diagram (equivalent to FIG. 1) of a flow of a refrigerant during a cooling-facility operation.
FIG. 4 is a diagram (equivalent to FIG. 1) of a flow of the refrigerant during a cooling operation.
FIG. 5 is a diagram (equivalent to FIG. 1) of a flow of the refrigerant during a cooling and cooling-facility operation.
FIG. 6 is a diagram (equivalent to FIG. 1) of a flow of the refrigerant during a heating operation.
FIG. 7 is a diagram (equivalent to FIG. 1) of a flow of the refrigerant during a heating and cooling-facility operation.
FIG. 8 is a diagram (equivalent to FIG. 1) of a flow of the refrigerant during a heating and cooling-facility heat recovery operation.
FIG. 9 is a diagram (equivalent to FIG. 1) of a flow of the refrigerant during a heating and cooling-facility waste heat operation.

### DESCRIPTION OF EMBODIMENTS

Embodiments will be described below with reference to the drawings. The following embodiments are preferable examples in nature, and are not intended to limit the scope of the present invention, the application of the present invention, or the use of the present invention.

### <<Embodiment>>

### <General Configuration>

A refrigeration apparatus (1) according to a first embodiment is configured to cool a cooling target and condition indoor air at the same time. The term "cooling target" as used herein may involve air in a facility such as a refrigerator, a freezer, or a showcase. In the following description, such a cooling target facility is referred to as a cooling facility.

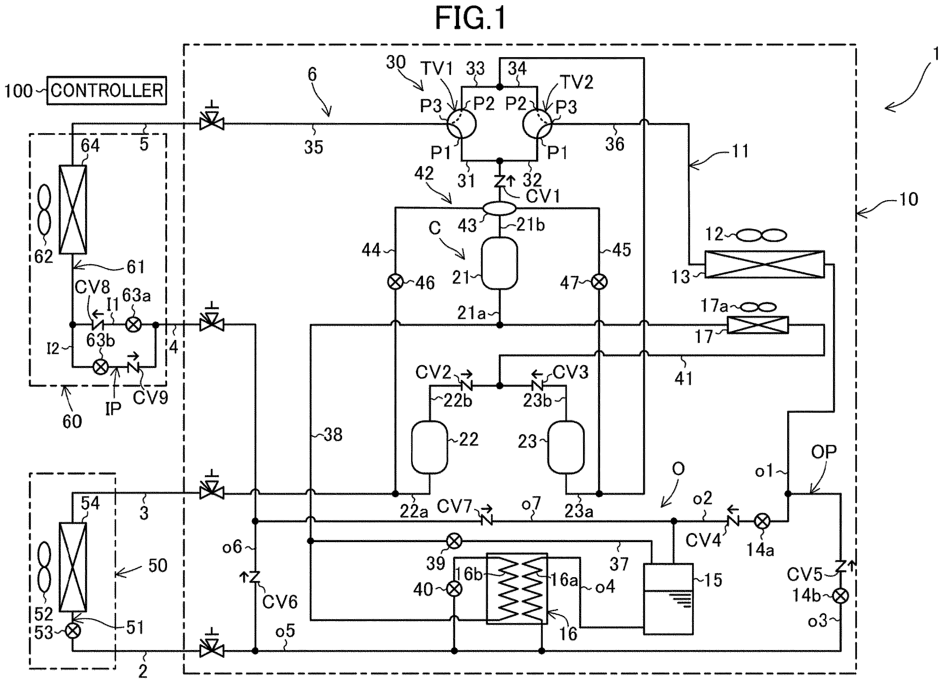

As illustrated in FIG. 1, the refrigeration apparatus (1) includes an outdoor unit (10) installed outdoors, a cooling facility unit (50) configured to cool inside air, an indoor unit (60) configured to condition indoor air, and a controller (100). The refrigeration apparatus (1) does not necessarily include one cooling facility unit (50) and one indoor unit (60). For example, the refrigeration apparatus (1) may include two or more cooling facility units (50) and two or more indoor units (60). These units (10, 50, 60) are connected via four connection pipes (2, 3, 4, 5) to constitute a refrigerant circuit (6).

The four connection pipes (2, 3, 4, 5) include a first liquid connection pipe (2), a first gas connection pipe (3), a second liquid connection pipe (4), and a second gas connection pipe (5). The first liquid connection pipe (2) and the first gas connection pipe (3) are provided for the cooling facility unit (50). The second liquid connection pipe (4) and the second gas connection pipe (5) are provided for the indoor unit (60).

A refrigeration cycle is achieved in such a manner that a refrigerant circulates through the refrigerant circuit (6). In the first embodiment, the refrigerant in the refrigerant circuit (6) is carbon dioxide. The refrigerant circuit (6) is configured to perform a refrigeration cycle in which a pressure above a critical pressure is applied to the refrigerant.

### <Outdoor Unit>

The outdoor unit (10) is a heat source unit to be installed outdoors. The outdoor unit (10) includes an outdoor fan (12) and an outdoor circuit (11). The outdoor circuit (11) includes a compression unit (C), a switching unit (30), an outdoor heat exchanger (13), a first outdoor expansion valve (14a), a second outdoor expansion valve (14b), a receiver (15), a cooling heat exchanger (16), and an intermediate cooler (17). The outdoor unit (10) is a refrigeration apparatus-use unit including a high-pressure flow path (O2, O3).

### <Compression Unit>

The compression unit (C) is configured to compress the refrigerant. The compression unit (C) includes a first compressor (21), a second compressor (22), and a third compressor (23). The compression unit (C) is of a two-stage compression type. The second compressor (22) and the third compressor (23) constitute a lower stage-side compressor. The second compressor (22) and the third compressor (23) are connected in parallel. The first compressor (21) constitutes a higher stage-side compressor. The first compressor (21) and the second compressor (22) are connected in series. The first compressor (21) and the third compressor (23) are connected in series. Each of the first compressor (21), the second compressor (22), and the third compressor (23) is a rotary compressor that includes a compression mechanism to be driven by a motor. Each of the first compressor (21), the second compressor (22), and the third compressor (23) is of a variable capacity type, and the operating frequency or the number of rotations of each compressor is adjustable.

A first suction pipe (21a) and a first discharge pipe (21b) are connected to the first compressor (21). A second suction pipe (22a) and a second discharge pipe (22b) are connected to the second compressor (22). A third suction pipe (23a) and a third discharge pipe (23b) are connected to the third compressor (23).

The second suction pipe (22a) communicates with the cooling facility unit (50). The second compressor (22) is a cooling facility-side compressor provided for the cooling facility unit (50). The third suction pipe (23a) communicates with the indoor unit (60). The third compressor (23) is an indoor-side compressor provided for the indoor unit (60).

### <Switching Unit>

The switching unit (30) is configured to switch a refrigerant flow path. The switching unit (30) includes a first pipe (31), a second pipe (32), a third pipe (33), a fourth pipe (34), a first three-way valve (TV1), and a second three-way valve (TV2). The first pipe (31) has an inlet end connected to the first discharge pipe (21b). The second pipe (32) has an inlet end connected to the first discharge pipe (21b). Each of the first pipe (31) and the second pipe (32) is a pipe on which a discharge pressure of the compression unit (C) acts. The third pipe (33) has an outlet end connected to the third suction pipe (23a) of the third compressor (23). The fourth pipe (34) has an outlet end connected to the third suction pipe (23a) of the third compressor (23). Each of the third pipe (33) and the fourth pipe (34) is a pipe on which a suction pressure of the compression unit (C) acts.

The first three-way valve (TV1) has a first port (P1), a second port (P2), and a third port (P3). The first port (P1) of the first three-way valve (TV1) is connected to an outlet end of the first pipe (31) serving as a high-pressure flow path. The second port (P2) of the first three-way valve (TV1) is connected to an inlet end of the third pipe (33) serving as a low-pressure flow path. The third port (P3) of the first three-way valve (TV1) is connected to an indoor gas-side flow path (35).

The second three-way valve (TV2) has a first port (P1), a second port (P2), and a third port (P3). The first port (P1) of the second three-way valve (TV2) is connected to an outlet end of the second pipe (32) serving as a high-pressure flow path. The second port (P2) of the second three-way valve (TV2) is connected to an inlet end of the fourth pipe (34) serving as a low-pressure flow path. The third port (P3) of the second three-way valve (TV2) is connected to an outdoor gas-side flow path (36).

Each of the first three-way valve (TV1) and the second three-way valve (TV2) is a rotary-type electrically driven three-way valve. Each three-way valve (TV1, TV2) is switched between a first state (a state indicated by a solid line in FIG. 1) and a second state (a state indicated by a broken line in FIG. 1). In each three-way valve (TV1, TV2) switched to the first state, the first port (P1) and the third port (P3) communicate with each other and the second port (P2) is closed. In each three-way valve (TV1, TV2) switched to the second state, the second port (P2) and the third port (P3) communicate with each other and the first port (P1) is closed.

### <Outdoor Heat Exchanger>

The outdoor heat exchanger (13) serves as a heat source-side heat exchanger. The outdoor heat exchanger (13) is a fin-and-tube air heat exchanger. The outdoor fan (12) is disposed near the outdoor heat exchanger (13). The outdoor fan (12) is configured to provide outdoor air. The outdoor heat exchanger causes the refrigerant flowing therethrough to exchange heat with the outdoor air provided by the outdoor fan (12).

The outdoor heat exchanger (13) has a gas end to which the outdoor gas-side flow path (36) is connected. The outdoor heat exchanger (13) has a liquid end to which an outdoor flow path (O) is connected.

### <Outdoor Flow Path>

The outdoor flow path (O) includes an outdoor first pipe (o1), an outdoor second pipe (o2), an outdoor third pipe (o3), an outdoor fourth pipe (o4), an outdoor fifth pipe (o5), an outdoor sixth pipe (o6), and an outdoor seventh pipe (o7). The outdoor first pipe (o1) has a first end connected to the liquid end of the outdoor heat exchanger (13). The outdoor first pipe (o1) has a second end to which a first end of the outdoor second pipe (o2) and a first end of the outdoor third pipe (o3) are connected. The outdoor second pipe (o2) has a second end connected to a top portion of the receiver (15). The outdoor fourth pipe (o4) has a first end connected to a bottom portion of the receiver (15). The outdoor fourth pipe (o4) has a second end to which a first end of the outdoor fifth pipe (o5) and a second end of the outdoor third pipe (o3) are connected. The outdoor fifth pipe (o5) has a second end connected to the first liquid connection pipe (2). The outdoor sixth pipe (o6) has a first end connected to a point between the two ends of the outdoor fifth pipe (o5). The outdoor sixth pipe (o6) has a second end connected to the second liquid connection pipe (4). The outdoor seventh pipe (o7) has a first end connected to a point between the two ends of the outdoor sixth pipe (o6). The outdoor seventh pipe (o7) has a second end connected to a point between the two ends of the outdoor second pipe (o2).

The outdoor second pipe (o2) and the outdoor third pipe (o3) are connected in parallel to constitute an outdoor parallel circuit (OP).

### <Outdoor Expansion Valve>

The first outdoor expansion valve (14a) is connected to the outdoor second pipe (o2). The second outdoor expansion valve (14b) is connected to the outdoor third pipe (o3). Each outdoor expansion valve (14a, 14b) is a decompression mechanism configured to decompress the refrigerant. Each outdoor expansion valve (14a, 14b) is a heat source expansion valve. Each outdoor expansion valve (14a, 14b) is an opening degree-changeable electronic expansion valve.

### <Receiver>

The receiver (15) serves as a container configured to store the refrigerant. The receiver (15) separates the refrigerant into the gas refrigerant and the liquid refrigerant. The receiver (15) has the top portion to which the second end of the outdoor second pipe (o2) and a first end of a degassing pipe (37) are connected. The degassing pipe (37) has a second end connected to a point between two ends of an injection pipe (38). A degassing valve (39) is connected to the degassing pipe (37). The degassing valve (39) is an opening degree-changeable electronic expansion valve.

### <Cooling Heat Exchanger>

The cooling heat exchanger (16) is configured to cool the refrigerant (mainly the liquid refrigerant) separated by the receiver (15). The cooling heat exchanger (16) includes a first refrigerant flow path (16a) and a second refrigerant flow path (16b). The first refrigerant flow path (16a) is connected to a point between the two ends of the outdoor fourth pipe (o4). The second refrigerant flow path (16b) is connected to a point between the two ends of the injection pipe (38).

The injection pipe (38) has a first end connected to a point between the two ends of the outdoor fifth pipe (o5). The injection pipe (38) has a second end connected to the first suction pipe (21a) of the first compressor (21). In other words, the injection pipe (38) has a second end connected to an intermediate pressure portion of the compression unit (C). The injection pipe (38) is provided with a reducing valve (40) located upstream of the second refrigerant flow path (16b). The reducing valve (40) is an opening degree-changeable expansion valve.

The cooling heat exchanger (16) causes the refrigerant flowing through the first refrigerant flow path (16a) to exchange heat with the refrigerant flowing through the second refrigerant flow path (16b). The refrigerant decompressed by the reducing valve (40) flows through the second refrigerant flow path (16b). Therefore, the cooling heat exchanger (16) cools the refrigerant flowing through the first refrigerant flow path (16a).

### intermediate Cooler>

The intermediate cooler (17) is connected to an intermediate flow path (41). The intermediate flow path (41) has a first end connected to the second discharge pipe (22b) of the second compressor (22) and the third discharge pipe (23b) of the third compressor (23). The intermediate flow path (41) has a second end connected to the first suction pipe (21a) of the first compressor (21). In other words, the intermediate flow path (41) has a second end connected to the intermediate pressure portion of the compression unit (C).

The intermediate cooler (17) is a fin-and-tube air heat exchanger. A cooling fan (17a) is disposed near the intermediate cooler (17). The intermediate cooler (17) causes the refrigerant flowing therethrough to exchange heat with outdoor air provided by the cooling fan (17a).

### <Oil Separation Circuit>

The outdoor circuit (11) includes an oil separation circuit (42). The oil separation circuit (42) includes an oil separator (43), a first oil return pipe (44), and a second oil return pipe (45). The oil separator (43) is connected to the first discharge pipe (21b) of the first compressor (21). The oil separator (43) is configured to separate oil from the refrigerant discharged from the compression unit (C). The first oil return pipe (44) has an inlet end connected to the oil separator (43). The first oil return pipe (44) has an outlet end connected to the second suction pipe (22a) of the second compressor (22). The second oil return pipe (45) has an outlet end connected to the third suction pipe (23a) of the third compressor (23). A first oil regulation valve (46) is connected to the first oil return pipe (44). A second oil regulation valve (47) is connected to the second oil return pipe (45).

The oil separated by the oil separator (43) is returned to the second compressor (22) via the first oil return pipe (44). The oil separated by the oil separator (43) is returned to the third compressor (23) via the second oil return pipe (45). The oil separated by the oil separator (43) may be directly returned to an oil reservoir in a casing of the second compressor (22). The oil separated by the oil separator (43) may be directly returned to an oil reservoir in a casing of the third compressor (23).

### <Cooling Facility Unit>

The cooling facility unit (50) is installed in, for example, a cold storage warehouse. The cooling facility unit (50) includes an inside fan (52) and a cooling facility circuit (51). The cooling facility circuit (51) has a liquid end to which the first liquid connection pipe (2) is connected. The cooling facility circuit (51) has a gas end to which the first gas connection pipe (3) is connected.

The cooling facility circuit (51) includes a cooling facility expansion valve (53) and a cooling facility heat exchanger (54) arranged in this order from the liquid end toward the gas end. The cooling facility expansion valve (53) is a utilization-side expansion valve. The cooling facility expansion valve (53) serves as an opening degree-changeable electronic expansion valve.

The cooling facility heat exchanger (54) is a fin-and-tube air heat exchanger. The inside fan (52) is disposed near the cooling facility heat exchanger (54). The inside fan (52) is configured to provide inside air. The cooling facility heat exchanger (54) causes the refrigerant flowing therethrough to exchange heat with the inside air provided by the inside fan (52).

### <Indoor Unit>

The indoor unit (60) is a utilization unit to be installed indoors. The indoor unit (60) includes an indoor fan (62) and an indoor circuit (61). The indoor circuit (61) has a liquid end to which the second liquid connection pipe (4) is connected. The indoor circuit (61) has a gas end to which the second gas connection pipe (5) is connected. The outdoor unit (10) is a refrigeration apparatus-use unit including a high-pressure flow path (I1, I2).

The indoor circuit (61) includes an indoor parallel circuit (IP) and an indoor heat exchanger (64) arranged in this order from the liquid end toward the gas end. The indoor parallel circuit (IP) includes an indoor first pipe (I1), an indoor second pipe (I2), a first indoor expansion valve (63a), and a second indoor expansion valve (63b).

The first indoor expansion valve (63a) is connected to the indoor first pipe (I1). The second indoor expansion valve (63b) is connected to the indoor second pipe (I2). Each indoor expansion valve (63a, 63b) is a utilization-side expansion valve. Each indoor expansion valve (63a, 63b) is an opening degree-changeable electronic expansion valve.

The indoor heat exchanger (64) is a utilization-side heat exchanger. The indoor heat exchanger (64) is a fin-and-tube air heat exchanger. The indoor fan (62) is disposed near the indoor heat exchanger (64). The indoor fan (62) is configured to provide indoor air. The indoor heat exchanger (64) causes the refrigerant flowing therethrough to exchange heat with the indoor air provided by the indoor fan (62).

### <Check Valve>

The outdoor circuit (11) includes a first check valve (CV1), a second check valve (CV2), a third check valve (CV3), a fourth check valve (CV4), a fifth check valve (CV5), a sixth check valve (CV6), and a seventh check valve (CV7). The first check valve (CV1) is connected to the first discharge pipe (21b). The second check valve (CV2) is connected to the second discharge pipe (22b). The third check valve (CV3) is connected to the third discharge pipe (23b). The fourth check valve (CV4) is connected to the outdoor second pipe (o2). The fifth check valve (CV5) is connected to the outdoor third pipe (o3). The sixth check valve (CV6) is connected to the outdoor sixth pipe (o6). The seventh check valve (CV7) is connected to the outdoor seventh pipe (o7).

The indoor circuit (61) includes an eighth check valve (CV8) and a ninth check valve (CV9). The eighth check valve (CV8) is connected to the indoor first pipe (I1). The ninth check valve (CV9) is connected to the indoor second pipe (I2).

These check valves (CV1 to CV9) each permit the flow of the refrigerant in a direction indicated by an arrow in FIG. 1 and prohibit the flow of the refrigerant in the opposite direction to the direction indicated by the arrow in FIG. 1.

### <Sensor>

The refrigeration apparatus (1) includes various sensors (not illustrated). These sensors are configured to detect indices such as a temperature and a pressure of the high-pressure refrigerant in the refrigerant circuit (6), a temperature and a pressure of the low-pressure refrigerant in the refrigerant circuit (6), a temperature and a pressure of the intermediate-pressure refrigerant in the refrigerant circuit (6), a temperature of the refrigerant in the outdoor heat exchanger (13), a temperature of the refrigerant in the cooling facility heat exchanger (54), a temperature of the refrigerant in the indoor heat exchanger (64), a degree of superheating of the refrigerant sucked in the second compressor (22), a degree of superheating of the refrigerant sucked in the third compressor (23), a degree of superheating of the refrigerant discharged from each of the first to third compressors (C1, C2, C3), a temperature of the outdoor air, a temperature of the inside air, and a temperature of the indoor air.

### <Controller>

The controller (100) is a control unit. The controller (100) includes a microcomputer mounted on a control board, and a memory device (specifically, a semiconductor memory) storing software for operating the microcomputer. The controller (100) is configured to control the respective components of the refrigeration apparatus (1), based on an operation command and a detection signal from a sensor. The controller (100) controls the respective components, thereby changing an operation of the refrigeration apparatus (1).

### <Details of Structure of Expansion Valve>

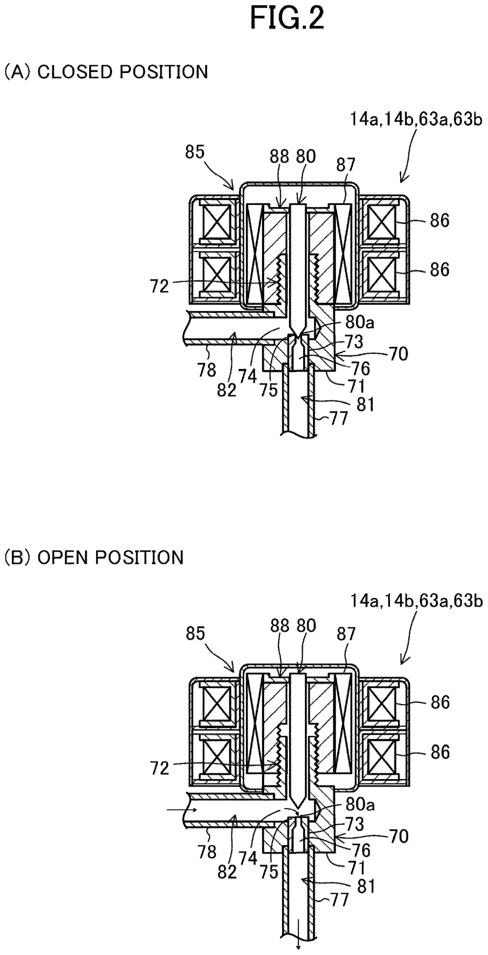

With reference to FIG. 2, a description will be given of a structure of each of the first outdoor expansion valve (14a), the second outdoor expansion valve (14b), the first indoor expansion valve (63a), and the second indoor expansion valve (63b). These expansion valves (14a, 14b, 63a, 63b) are valve mechanisms similar in structure to one another. Each expansion valve (14a, 14b, 63a, 63b) is an electronic expansion valve. Specifically, each expansion valve (14a, 14b, 63a, 63b) is of a stepping motor drive type.

Each expansion valve (14a, 14b, 63a, 63b) includes a joint main body (70), a needle valve (80), and a driver (85).

The joint main body (70) includes a body portion (71) having a substantially columnar shape and a male screw portion (72) protruding from an end face of the body portion (71) (an upper end face in FIG. 2). The body portion (71) has a first hole (73) and a second hole (74).

The first hole (73) is located opposite a distal end of the needle valve (80). The first hole (73) is located forward of the needle valve (80) in a moving direction of the needle valve (80). A valve seat (75) having a tubular shape is inserted through the first hole (73). The valve seat (75) is held in the first hole (73). A communication path (76) passes through the valve seat (75) in an axial direction. The communication path (76) has an inner diameter that decreases toward the needle valve (80).

The second hole (74) passes through the body portion (71) in a radial direction. The second hole (74) extends perpendicularly to the first hole (73). The first hole (73) has a depth portion that defines a space where the needle valve (80) is movable.

A first connection pipe (77) is connected to a valve seat (75)-side end face (i.e., a lower face) of the body portion (71). The first connection pipe (77) communicates with the communication path (76) in the valve seat (75). A second connection pipe (78) communicates with the second hole (74). The first connection pipe (77) is substantially perpendicular to the second connection pipe (78). In each expansion valve (14a, 14b, 63a, 63b), an internal flow path of the first connection pipe (77) and the communication path (76) constitute a first flow path (81). In each expansion valve (14a, 14b, 63a, 63b), an internal flow path of the second connection pipe (78) and the second hole (74) constitute a second flow path (82).

The needle valve (80) is a valve body configured to adjust an opening degree of the expansion valve (14a, 14b, 63a, 63b). The needle valve (80) extends in an axial direction of the body portion (71). The needle valve (80) has a rod shape or an elongated cylindrical shape. The needle valve (80) has a distal end (80a) that is opposite the valve seat (75) or the first flow path (81). The distal end (80a) has a tapered shape such that its outer diameter decreases toward its distal end.

The driver (85) is disposed around the male screw portion (72) of the body portion (71). The driver (85) includes a coil portion (86), a rotor (87), and a coupling member (88). The coil portion (86) is a wire disposed around the rotor (87). The rotor (87) has a tubular shape and is rotatably supported in the coil portion (86). The coupling member (88) has a tubular shape and is fixed to an inner peripheral face of the rotor (87). The coupling member (88) holds at its axial center the needle valve (80). The coupling member (88) has in its inner peripheral face a female screw portion into which the male screw portion (72) is screwed.

The rotor (87) and the coupling member (88) are driven to rotate in a forward direction and a reverse direction in accordance with an energization state of the coil portion (86). When the rotor (87) rotates in the forward direction, the coupling member (88) rotates in a tightening direction, so that the needle valve (80) is pushed out toward the first hole (73). When the rotor (87) rotates in the reverse direction, the coupling member (88) rotates in an untightening direction, so that the needle valve (80) is pulled back from the first hole (73).

The driver (85) thus moves the needle valve (80) in the axial direction. Specifically, the driver (85) moves the needle valve (80) between a first position and a second position illustrated in FIGS. 2(A) and 2(B), for example.

The first position corresponds to a closed position illustrated in FIG. 2(A). When the needle valve (80) is at the closed position, the distal end (80a) of the needle valve (80) is in contact with the valve seat (75) and the distal end (80a) of the needle valve (80) closes the communication path (76). In this state, the first flow path (81) and the second flow path (82) are cut off.

The second position corresponds to an open position illustrated in FIG. 2(B). When the needle valve (80) is at the open position, the distal end (80a) of the needle valve (80) is separate from the valve seat (75), so that the communication path (76) is open. The first flow path (81) and the second flow path (82) thus communicate with each other. A pressure reducing amount of the expansion valve (14a, 14b, 63a, 63b) is adjusted in accordance with a distance from the distal end (80a) to the valve seat (75).

### <Indoor Parallel Circuit>

As illustrated in FIG. 1, the indoor parallel circuit (IP) includes the indoor first pipe (I1) and the indoor second pipe (I2) that are connected in parallel. The indoor first pipe (I1) is a first high-pressure flow path through which the high-pressure refrigerant flows. The indoor second pipe (I2) is a second high-pressure flow path through which the high-pressure refrigerant flows. To the indoor first pipe (I1), the first indoor expansion valve (63a) and the eighth check valve (CV8) are connected in this order from the upstream side toward the downstream side. To the indoor second pipe (I2), the second indoor expansion valve (63b) and the ninth check valve (CV9) are connected in this order from the upstream side toward the downstream side. The eighth check valve (CV8) and the ninth check valve (CV9) each serve as a regulation mechanism configured to regulate a flow of the refrigerant in the corresponding indoor expansion valve (63a, 63b).

The indoor first pipe (I1) causes the high-pressure refrigerant to always flow through the second flow path (82) and first flow path (81) of the first indoor expansion valve (63a) in this order. The second flow path (82) of the first indoor expansion valve (63a) is on the upstream side of the indoor first pipe (I1). The first flow path (81) of the first indoor expansion valve (63a) is on the downstream side of the indoor second pipe (I2).

The indoor second pipe (I2) causes the high-pressure refrigerant to always flow through the second flow path (82) and first flow path (81) of the second indoor expansion valve (63b) in this order. The second flow path (82) of the second indoor expansion valve (63b) is on the upstream side of the indoor second pipe (I2). The first flow path (81) of the second indoor expansion valve (63b) is on the downstream side of the indoor second pipe (I2).

The indoor parallel circuit (IP) causes the refrigerant to flow through the indoor first pipe (I1) and the refrigerant to flow through the indoor second pipe (I2) in opposite directions. The indoor parallel circuit (IP) causes the high-pressure refrigerant to flow through the indoor first pipe (I1) in a first refrigeration cycle. The indoor parallel circuit (IP) causes the high-pressure refrigerant to flow through the indoor second pipe (I2) in a second refrigeration cycle. In the first refrigeration cycle, the outdoor heat exchanger (13) serves as a radiator and the indoor heat exchanger (64) serves as an evaporator. In the second refrigeration cycle, the indoor heat exchanger (64) serves as a radiator and the outdoor heat exchanger (13) serves as an evaporator.

### <Outdoor Parallel Circuit>

The outdoor parallel circuit (OP) includes the outdoor second pipe (o2) and the outdoor third pipe (o3) that are connected in parallel. The outdoor second pipe (o2) is a first high-pressure flow path through which the high-pressure refrigerant flows. The outdoor third pipe (o3) is a second high-pressure flow path through which the high-pressure refrigerant flows. To the outdoor second pipe (o2), the first outdoor expansion valve (14a) and the fourth check valve (CV4) are connected in this order from the upstream side toward the downstream side. To the outdoor third pipe (o3), the second outdoor expansion valve (14b) and the fifth check valve (CV5) are connected in this order from the upstream side toward the downstream side. The fourth check valve (CV4) and the fifth check valve (CV5) each serve as a regulation mechanism configured to regulate a flow of the refrigerant in the corresponding outdoor expansion valve (14a, 14b).

The outdoor second pipe (o2) causes the high-pressure refrigerant to always flow through the second flow path (82) and first flow path (81) of the first outdoor expansion valve (14a) in this order. The second flow path (82) of the first outdoor expansion valve (14a) is on the upstream side of the outdoor second pipe (o2). The first flow path (81) of the first outdoor expansion valve (14a) is on the downstream side of the outdoor second pipe (o2).

The outdoor third pipe (o3) causes the high-pressure refrigerant to always flow through the second flow path (82) and first flow path (81) of the second outdoor expansion valve (14b) in this order. The second flow path (82) of the second indoor expansion valve (63b) is on the upstream side of the outdoor third pipe (o3). The first flow path (81) of the second indoor expansion valve (63b) is on the downstream side of the outdoor third pipe (o3).

The outdoor parallel circuit (OP) causes the refrigerant to flow through the outdoor second pipe (o2) and the refrigerant to flow through the outdoor third pipe (o3) in opposite directions. The outdoor parallel circuit (OP) causes the high-pressure refrigerant to flow through the outdoor second pipe (o2) in the first refrigeration cycle. The outdoor parallel circuit (OP) causes the high-pressure refrigerant to flow through the outdoor third pipe (o3) in the second refrigeration cycle.

### -Operations-

Next, a specific description will be given of operations to be carried out by the refrigeration apparatus (1). The operations of the refrigeration apparatus (1) include a cooling-facility operation, a cooling operation, a cooling and cooling-facility operation, a heating operation, a heating and cooling-facility operation, a heating and cooling-facility heat recovery operation, a heating and cooling-facility waste heat operation, and a defrosting operation.

During the cooling-facility operation, the cooling facility unit (50) operates, while the indoor unit (60) stops. During the cooling operation, the cooling facility unit (50) stops, while the indoor unit (60) cools the indoor air. During the cooling and cooling-facility operation, the cooling facility unit (50) operates, while the indoor unit (60) cools the indoor air. During the heating operation, the cooling facility unit (50) stops, while the indoor unit (60) heats the indoor air. During the heating and cooling-facility operation, the heating and cooling-facility heat recovery operation, and the heating and cooling-facility waste heat operation, the cooling facility unit (50) operates, while the indoor unit (60) heats the indoor air. During the defrosting operation, the outdoor heat exchanger (13) melts frost on a surface thereof.

The heating and cooling-facility operation is carried out on a condition that a relatively large heating capacity is required for the indoor unit (60). The heating and cooling-facility waste heat operation is carried out on a condition that a relatively small heating capacity is required for the indoor unit (60). The heating and cooling-facility heat recovery operation is carried out on a condition that the heating capacity required for the indoor unit (60) falls within a range between a heating capacity required in the heating operation and a cooling capacity required in the cooling-facility operation (i.e., on a condition that the balance between the cooling capacity required in the cooling-facility operation and the heating capacity required in the heating operation is achieved).

### <Cooling-Facility Operation>

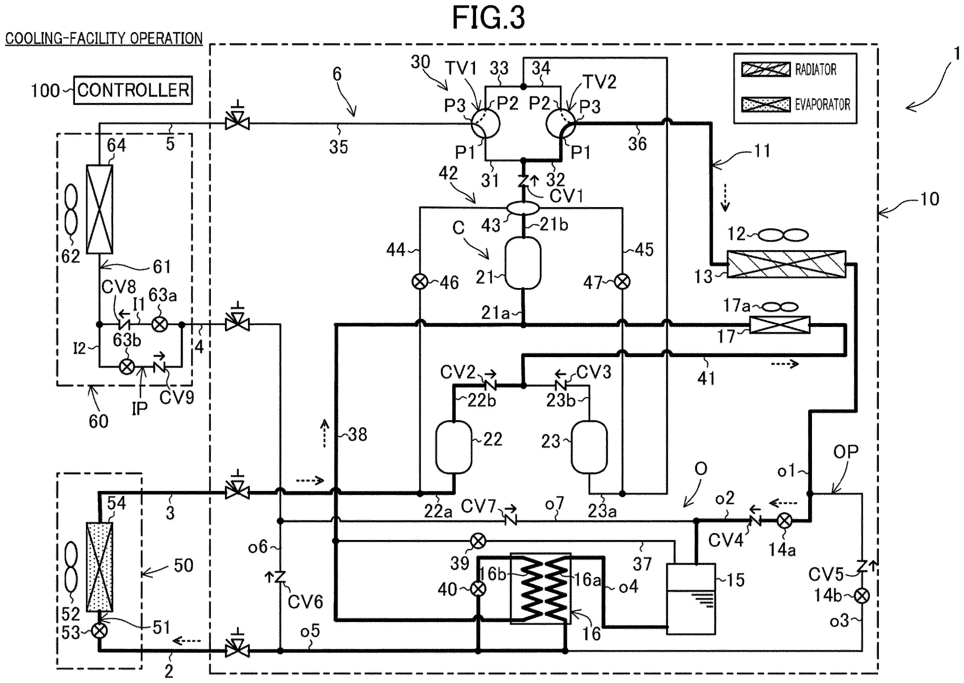

During the cooling-facility operation illustrated in FIG. 3, the first three-way valve (TV1) is in the second state, while the second three-way valve (TV2) is in the first state. The first outdoor expansion valve (14a) is opened at a predetermined opening degree. The opening degree of the cooling facility expansion valve (53) is adjusted by superheating control. The first indoor expansion valve (63a) is fully closed. The opening degree of the reducing valve (40) is appropriately adjusted. The outdoor fan (12) and the inside fan (52) operate, while the indoor fan (62) stops. The first compressor (21) and the second compressor (22) operate, while the third compressor (23) stops. During the cooling-facility operation, a refrigeration cycle is achieved, in which the compression unit (C) compresses the refrigerant, the outdoor heat exchanger (13) causes the refrigerant to dissipate heat, and the cooling facility heat exchanger (54) evaporates the refrigerant.

As illustrated in FIG. 3, the second compressor (22) compresses the refrigerant, the intermediate cooler (17) cools the refrigerant, and the first compressor (21) sucks in the refrigerant. After the first compressor (21) compresses the refrigerant, the outdoor heat exchanger (13) causes the refrigerant to dissipate heat.

The resultant refrigerant flows through the outdoor second pipe (o2). In the outdoor second pipe (o2), the high-pressure refrigerant passes the first outdoor expansion valve (14a) in the open state. At this time, as illustrated in FIG. 2(B), the high-pressure refrigerant flows through the second flow path (82) and the first flow path (81) in this order. Thereafter, the high-pressure refrigerant passes the fourth check valve (CV4).

The refrigerant then flows through the receiver (15). The cooling heat exchanger (16) then cools the refrigerant. After the cooling heat exchanger (16) cools the refrigerant, the cooling facility expansion valve (53) decompresses the refrigerant, and the cooling facility heat exchanger (54) evaporates the refrigerant. The inside air is thus cooled. After the cooling heat exchanger (16) evaporates the refrigerant, the second compressor (22) sucks in the refrigerant to compress the refrigerant again.

### <Cooling Operation>

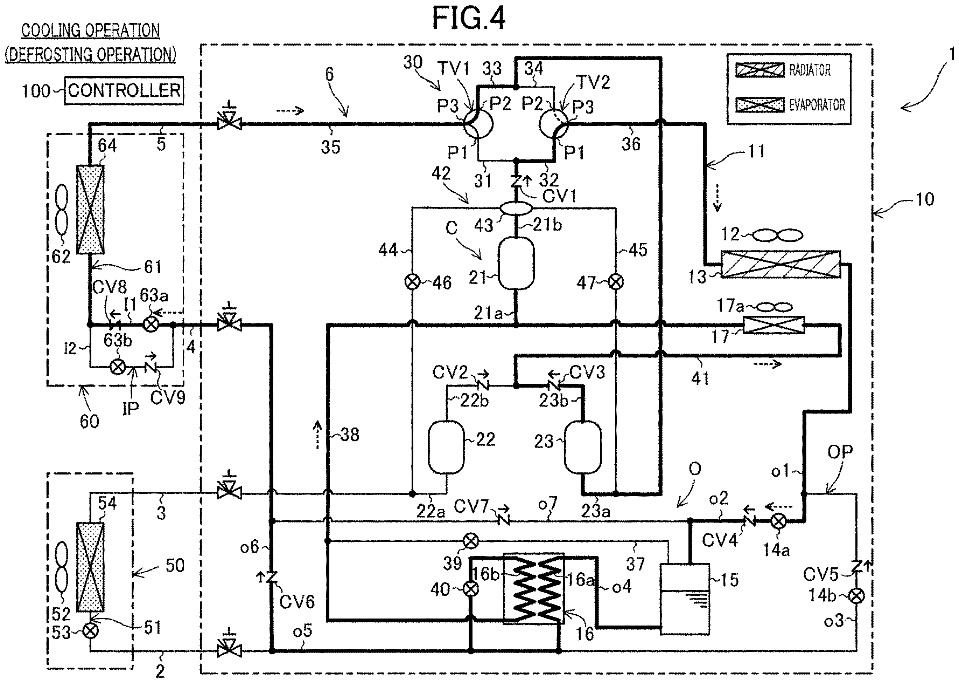

During the cooling operation illustrated in FIG. 4, the first three-way valve (TV1) is in the second state, while the second three-way valve (TV2) is in the first state. The first outdoor expansion valve (14a) is opened at a predetermined opening degree. The cooling facility expansion valve (53) is fully closed. The opening degree of the first indoor expansion valve (63a) is adjusted by superheating control. The opening degree of the reducing valve (40) is appropriately adjusted. The outdoor fan (12) and the indoor fan (62) operate, while the inside fan (52) stops. The first compressor (21) and the third compressor (23) operate, while the second compressor (22) stops. During the cooling operation, a refrigeration cycle (the first refrigeration cycle) is achieved, in which the compression unit (C) compresses the refrigerant, the outdoor heat exchanger (13) causes the refrigerant to dissipate heat, and the indoor heat exchanger (64) evaporates the refrigerant.

As illustrated in FIG. 4, the third compressor (23) compresses the refrigerant, the intermediate cooler (17) cools the refrigerant, and the first compressor (21) sucks in the refrigerant. After the first compressor (21) compresses the refrigerant, the outdoor heat exchanger (13) causes the refrigerant to dissipate heat.

The resultant refrigerant flows through the outdoor second pipe (o2). In the outdoor second pipe (o2), the high-pressure refrigerant passes the first outdoor expansion valve (14a) in the open state. At this time, the high-pressure refrigerant flows through the second flow path (82) and the first flow path (81) in this order. Thereafter, the high-pressure refrigerant passes the fourth check valve (CV4).

The refrigerant then flows through the receiver (15). The cooling heat exchanger (16) then cools the refrigerant. After the cooling heat exchanger (16) cools the refrigerant, the refrigerant flows into the indoor first pipe (I1). In the indoor first pipe (I1), the first indoor expansion valve (63a) decompresses the high-pressure refrigerant. At this time, the high-pressure refrigerant flows through the second flow path (82) and the first flow path (81) in this order. Thereafter, the high-pressure refrigerant passes the eighth check valve (CV8).

The indoor heat exchanger (64) then evaporates the refrigerant. The indoor air is thus cooled. After the indoor heat exchanger (64) evaporates the refrigerant, the third compressor (23) sucks in the refrigerant to compress the refrigerant again.

### <Cooling and Cooling-Facility Operation>

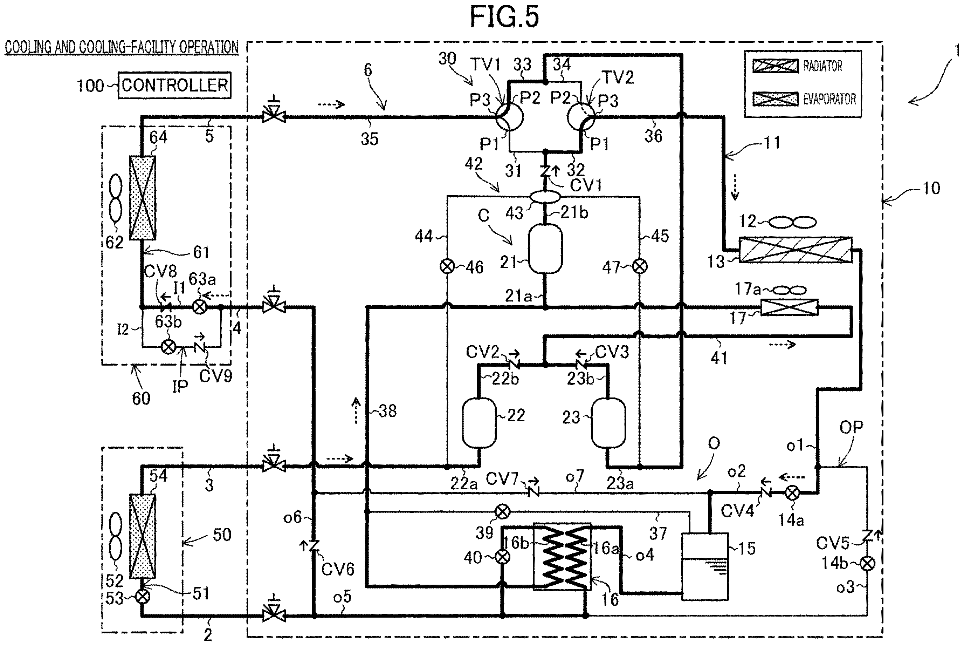

During the cooling and cooling-facility operation illustrated in FIG. 5, the first three-way valve (TV1) is in the second state, while the second three-way valve (TV2) is in the first state. The first outdoor expansion valve (14a) is opened at a predetermined opening degree. The opening degree of each of the cooling facility expansion valve (53) and the first indoor expansion valve (63a) is adjusted by superheating control. The opening degree of the reducing valve (40) is appropriately adjusted. The outdoor fan (12), the inside fan (52), and the indoor fan (62) operate. The first compressor (21), the second compressor (22), and the third compressor (23) operate. During the cooling and cooling-facility operation, a refrigeration cycle (the first refrigeration cycle) is achieved, in which the compression unit (C) compresses the refrigerant, the outdoor heat exchanger (13) causes the refrigerant to dissipate heat, and each of the cooling facility heat exchanger (54) and the indoor heat exchanger (64) evaporates the refrigerant.

As illustrated in FIG. 5, each of the second compressor (22) and the third compressor (23) compresses the refrigerant, the intermediate cooler (17) cools the refrigerant, and the first compressor (21) sucks in the refrigerant. After the first compressor (21) compresses the refrigerant, the outdoor heat exchanger (13) causes the refrigerant to dissipate heat.

The resultant refrigerant flows through the outdoor second pipe (o2). In the outdoor second pipe (o2), the high-pressure refrigerant passes the first outdoor expansion valve (14a) in the open state. At this time, the high-pressure refrigerant flows through the second flow path (82) and the first flow path (81) in this order. Thereafter, the high-pressure refrigerant passes the fourth check valve (CV4).

The refrigerant then flows through the receiver (15). The cooling heat exchanger (16) then cools the refrigerant. After the cooling heat exchanger (16) cools the refrigerant, the refrigerant is diverted into the cooling facility unit (50) and the indoor unit (60). The cooling facility expansion valve (53) decompresses the refrigerant, and the cooling facility heat exchanger (54) evaporates the refrigerant. After the cooling facility heat exchanger (54) evaporates the refrigerant, the second compressor (22) sucks in the refrigerant to compress the refrigerant again.

When the refrigerant flows into the indoor unit (60), the refrigerant flows through the indoor first pipe (I1). In the indoor first pipe (I1), the first indoor expansion valve (63a) decompresses the high-pressure refrigerant. At this time, the high-pressure refrigerant flows through the second flow path (82) and the first flow path (81) in this order. Thereafter, the high-pressure refrigerant passes the eighth check valve (CV8).

The indoor heat exchanger (64) then evaporates the refrigerant. After the indoor heat exchanger (64) evaporates the refrigerant, the third compressor (23) sucks in the refrigerant to compress the refrigerant again.

### <Heating Operation>

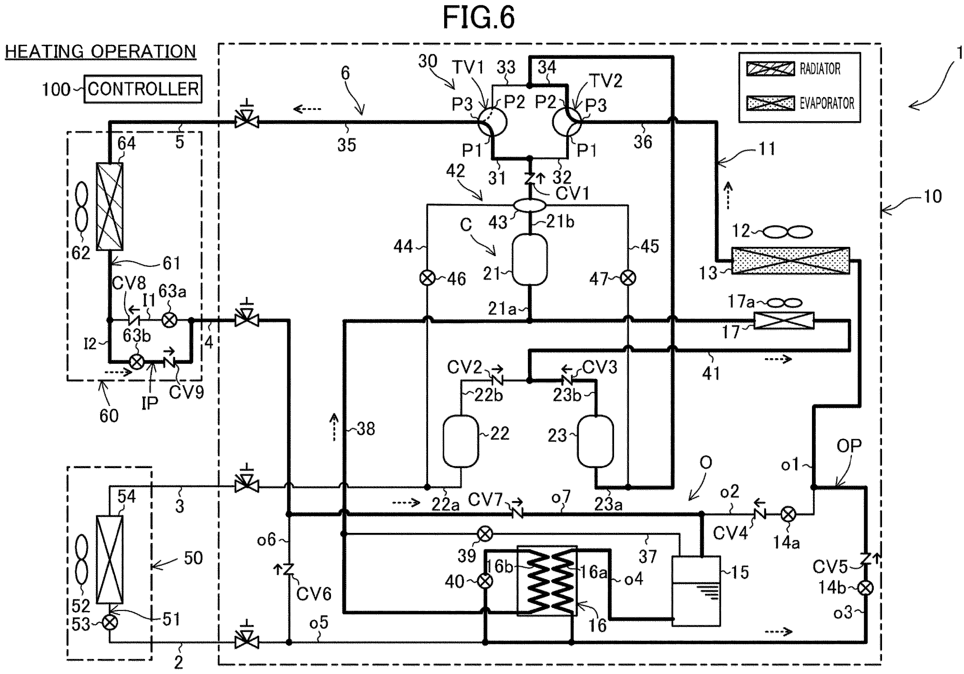

During the heating operation illustrated in FIG. 6, the first three-way valve (TV1) is in the first state, while the second three-way valve (TV2) is in the second state. The second indoor expansion valve (63b) is opened at a predetermined opening degree. The cooling facility expansion valve (53) is fully closed. The opening degree of the second outdoor expansion valve (14b) is adjusted by superheating control. The opening degree of the reducing valve (40) is appropriately adjusted. The outdoor fan (12) and the indoor fan (62) operate, while the inside fan (52) stops. The first compressor (21) and the third compressor (23) operate, while the second compressor (22) stops. During the heating operation, a refrigeration cycle (the second refrigeration cycle) is achieved, in which the compression unit (C) compresses the refrigerant, the indoor heat exchanger (64) causes the refrigerant to dissipate heat, and the outdoor heat exchanger (13) evaporates the refrigerant.

As illustrated in FIG. 6, the third compressor (23) compresses the refrigerant, and the first compressor (21) sucks in the refrigerant. After the first compressor (21) compresses the refrigerant, the indoor heat exchanger (64) causes the refrigerant to dissipate heat. The indoor air is thus heated.

After the indoor heat exchanger (64) causes the refrigerant to dissipate heat, the resultant refrigerant flows into the indoor second pipe (I2). In the indoor second pipe (I2), the high-pressure refrigerant passes the second indoor expansion valve (63b). At this time, the high-pressure refrigerant flows through the second flow path (82) and the first flow path (81) in this order. Thereafter, the high-pressure refrigerant passes the ninth check valve (CV9).

The refrigerant then flows through the receiver (15). The cooling heat exchanger (16) then cools the refrigerant. After the cooling heat exchanger (16) cools the refrigerant, the refrigerant flows into the outdoor third pipe (o3). In the outdoor third pipe (o3), the high-pressure refrigerant passes the second outdoor expansion valve (14b). At this time, the high-pressure refrigerant flows through the second flow path (82) and the first flow path (81) in this order. Thereafter, the high-pressure refrigerant passes the fifth check valve (CV5).

The outdoor heat exchanger (13) then evaporates the refrigerant. After the indoor heat exchanger (64) evaporates the refrigerant, the third compressor (23) sucks in the refrigerant to compress the refrigerant again.

### <Heating and Cooling-Facility Operation>

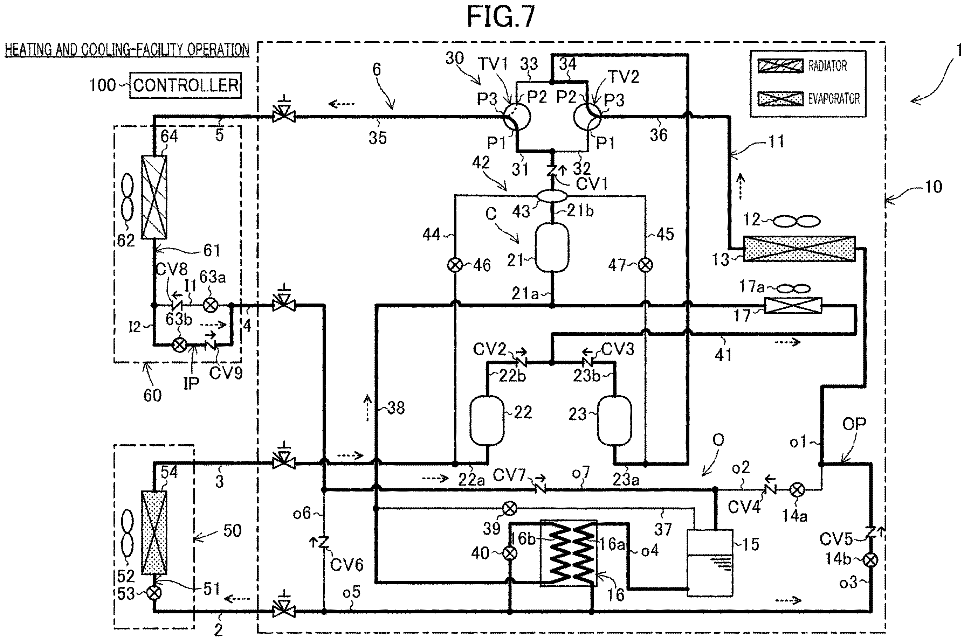

During the heating and cooling-facility operation illustrated in FIG. 7, the first three-way valve (TV1) is in the first state, while the second three-way valve (TV2) is in the second state. The second indoor expansion valve (63b) is opened at a predetermined opening degree. The opening degree of each of the cooling facility expansion valve (53) and the second outdoor expansion valve (14b) is adjusted by superheating control. The opening degree of the reducing valve (40) is appropriately adjusted. The outdoor fan (12), the inside fan (52), and the indoor fan (62) operate. The first compressor (21), the second compressor (22), and the third compressor (23) operate. During the heating and cooling-facility operation, a refrigeration cycle (the second refrigeration cycle) is achieved, in which the compression unit (C) compresses the refrigerant, the indoor heat exchanger (64) causes the refrigerant to dissipate heat, and each of the cooling facility heat exchanger (54) and the outdoor heat exchanger (13) evaporates the refrigerant.

As illustrated in FIG. 7, each of the second compressor (22) and the third compressor (23) compresses the refrigerant, and the first compressor (21) sucks in the refrigerant. After the first compressor (21) compresses the refrigerant, the indoor heat exchanger (64) causes the refrigerant to dissipate heat. The indoor air is thus heated.

After the indoor heat exchanger (64) causes the refrigerant to dissipate heat, the resultant refrigerant flows into the indoor second pipe (I2). In the indoor second pipe (I2), the high-pressure refrigerant passes the second indoor expansion valve (63b). At this time, the high-pressure refrigerant flows through the second flow path (82) and the first flow path (81) in this order. Thereafter, the high-pressure refrigerant passes the ninth check valve (CV9).

The refrigerant then flows through the receiver (15). The cooling heat exchanger (16) then cools the refrigerant. After the cooling heat exchanger (16) cools the refrigerant, a part of the refrigerant flows into the outdoor third pipe (o3). In the outdoor third pipe (o3), the high-pressure refrigerant passes the second outdoor expansion valve (14b). At this time, the high-pressure refrigerant flows through the second flow path (82) and the first flow path (81) in this order. Thereafter, the high-pressure refrigerant passes the fifth check valve (CV5).

The outdoor heat exchanger (13) then evaporates the refrigerant. After the indoor heat exchanger (64) evaporates the refrigerant, the third compressor (23) sucks in the refrigerant to compress the refrigerant again.

After the cooling heat exchanger (16) cools the refrigerant, the cooling facility expansion valve (53) decompresses the remaining refrigerant, and the cooling facility heat exchanger (54) evaporates the refrigerant. The inside air is thus cooled. After the cooling facility heat exchanger (54) evaporates the refrigerant, the second compressor (22) sucks in the refrigerant to compress the refrigerant again.

### <Heating and Cooling-Facility Heat Recovery Operation>

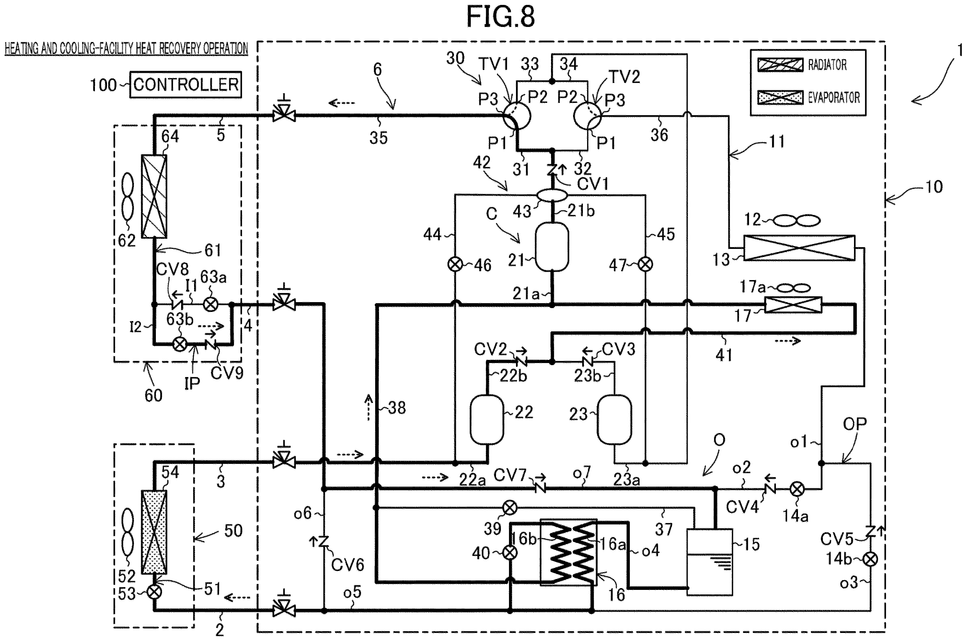

During the heating and cooling-facility heat recovery operation illustrated in FIG. 8, the first three-way valve (TV1) is in the first state, while the second three-way valve (TV2) is in the second state. The second indoor expansion valve (63b) is opened at a predetermined opening degree. The second outdoor expansion valve (14b) is fully closed. The opening degree of the cooling facility expansion valve (53) is adjusted by superheating control. The opening degree of the reducing valve (40) is appropriately adjusted. The indoor fan (62) and the inside fan (52) operate, while the outdoor fan (12) stops. The first compressor (21) and the second compressor (22) operate, while the third compressor (23) stops. During the heating and cooling-facility heat recovery operation, a refrigeration cycle is achieved, in which the compression unit (C) compresses the refrigerant, the indoor heat exchanger (64) causes the refrigerant to dissipate heat, the cooling facility heat exchanger (54) evaporates the refrigerant, and the outdoor heat exchanger (13) substantially stops.

As illustrated in FIG. 8, the second compressor (22) compresses the refrigerant, and the first compressor (21) sucks in the refrigerant. After the first compressor (21) compresses the refrigerant, the indoor heat exchanger (64) causes the refrigerant to dissipate heat. The indoor air is thus heated.

After the indoor heat exchanger (64) causes the refrigerant to dissipate heat, the resultant refrigerant flows into the indoor second pipe (I2). In the indoor second pipe (I2), the high-pressure refrigerant passes the second indoor expansion valve (63b). At this time, the high-pressure refrigerant flows through the second flow path (82) and the first flow path (81) in this order. Thereafter, the high-pressure refrigerant passes the ninth check valve (CV9).

The refrigerant then flows through the receiver (15). The cooling heat exchanger (16) then cools the refrigerant. After the cooling heat exchanger (16) cools the refrigerant, the cooling facility expansion valve (53) decompresses the refrigerant, and the cooling facility heat exchanger (54) evaporates the refrigerant. After the cooling facility heat exchanger (54) evaporates the refrigerant, the second compressor (22) sucks in the refrigerant to compress the refrigerant again.

### <Heating and Cooling-Facility Waste Heat Operation>

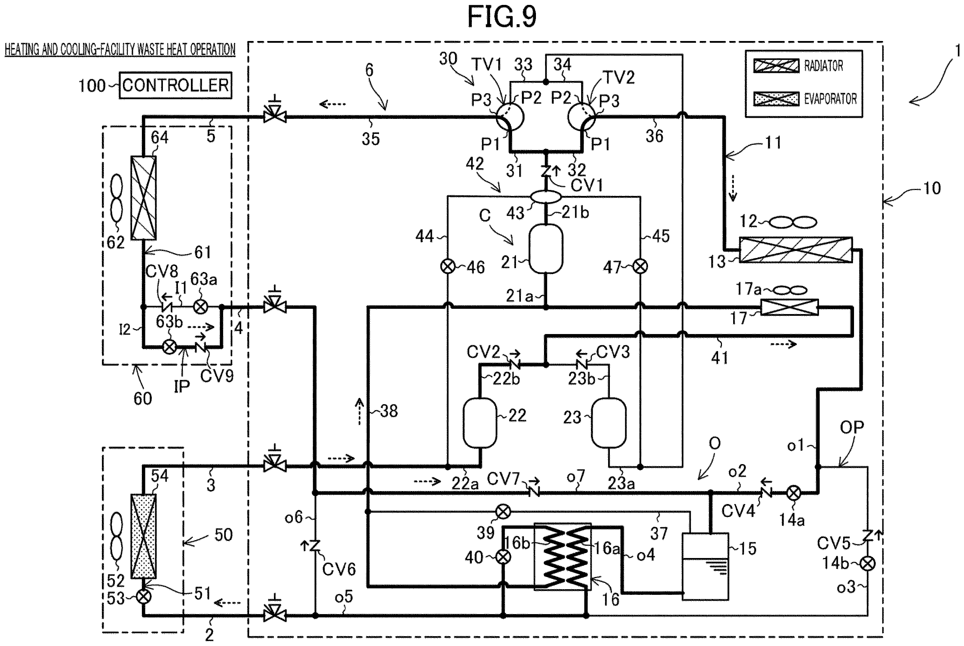

During the heating and cooling-facility waste heat operation illustrated in FIG. 9, the first three-way valve (TV1) is in the first state, while the second three-way valve (TV2) is in the first state. Each of the second indoor expansion valve (63b) and the first outdoor expansion valve (14a) is opened at a predetermined opening degree. The opening degree of the cooling facility expansion valve (53) is adjusted by superheating control. The opening degree of the reducing valve (40) is appropriately adjusted. The outdoor fan (12), the inside fan (52), and the indoor fan (62) operate. The first compressor (21) and the second compressor (22) operate, while the third compressor (23) stops. During the heating and cooling-facility waste heat operation, a refrigeration cycle is achieved, in which the compression unit (C) compresses the refrigerant, each of the indoor heat exchanger (64) and the outdoor heat exchanger (13) causes the refrigerant to dissipate heat, and the cooling facility heat exchanger (54) evaporates the refrigerant.

As illustrated in FIG. 9, the second compressor (22) compresses the refrigerant, and the first compressor (21) sucks in the refrigerant. After the first compressor (21) compresses the refrigerant, the outdoor heat exchanger (13) causes a part of the refrigerant to dissipate heat.

The resultant refrigerant flows through the outdoor second pipe (o2). In the outdoor second pipe (o2), the high-pressure refrigerant passes the first outdoor expansion valve (14a) in the open state. At this time, the high-pressure refrigerant flows through the second flow path (82) and the first flow path (81) in this order. Thereafter, the high-pressure refrigerant passes the fourth check valve (CV4).

After the first compressor (21) compresses the refrigerant, the indoor heat exchanger (64) causes the remaining refrigerant to dissipate heat. The indoor air is thus heated.

After the indoor heat exchanger (64) causes the refrigerant to dissipate heat, the resultant refrigerant flows into the indoor second pipe (I2). In the indoor second pipe (I2), the high-pressure refrigerant passes the second indoor expansion valve (63b). At this time, the high-pressure refrigerant flows through the second flow path (82) and the first flow path (81) in this order. Thereafter, the high-pressure refrigerant passes the ninth check valve (CV9).

After the outdoor heat exchanger (13) causes the refrigerant to dissipate heat and the indoor heat exchanger (64) causes the refrigerant to dissipate heat, both the refrigerants flow into the receiver (15) in a merged state. The cooling heat exchanger (16) then cools the refrigerant. After the cooling heat exchanger (16) cools the refrigerant, the cooling facility expansion valve (53) decompresses the refrigerant, and the cooling facility heat exchanger (54) evaporates the refrigerant. The inside air is thus cooled. After the cooling facility heat exchanger (54) evaporates the refrigerant, the second compressor (22) sucks in the refrigerant to compress the refrigerant again.

### <Defrosting Operation>

During the defrosting operation, the respective components operate in the same manners as those during the cooling operation illustrated in FIG. 4. During the defrosting operation, each of the second compressor (22) and the first compressor (21) compresses the refrigerant, and the outdoor heat exchanger (13) causes the refrigerant to dissipate heat. The heat inside the outdoor heat exchanger (13) thus melts frost on the surface of the outdoor heat exchanger (13). After the defrosting in the outdoor heat exchanger (13), the indoor heat exchanger (64) evaporates the refrigerant, and then the second compressor (22) sucks in the refrigerant to compress the refrigerant again.

### -Problem of Valve Mechanism-

In the refrigeration apparatus (1), the refrigerant circuit (6) performs the refrigeration cycle in which the refrigerant is compressed at the critical pressure or more. Therefore, the high-pressure refrigerant above the critical pressure passes the indoor expansion valve (14a, 14b, 63a, 63b) and the outdoor expansion valve (14a, 14b, 63a, 63b). In this expansion valve (14a, 14b, 63a, 63b), when the high-pressure refrigerant flows through the first flow path (81) and the second flow path (82) (see FIGS. 2(A) and 2(B)) in this order, the pressure of the high-pressure refrigerant acts on the distal end (95b) of the needle valve (80). This pressure pushes the distal end (95b) to an open direction (upward in FIGS. 2(A) and 2(B)), so that the expansion valve (14a, 14b, 63a, 63b) may malfunction.

### -Functional Effects of High-Pressure Flow Path-

In view of this, in the refrigeration apparatus (1) according to this embodiment, each expansion valve (14a, 14b, 63a, 63b) causes the high-pressure refrigerant to always flow through the second flow path (82) and the first flow path (81) in this order.

The foregoing first refrigeration cycle is achieved during the cooling operation, the cooling and cooling-facility operation, and the defrosting operation. In the first refrigeration cycle, the high-pressure refrigerant flows through the outdoor second pipe (o2) of the outdoor parallel circuit (OP). Since the fifth check valve (CV5) closes the outdoor third pipe (o3), the high-pressure refrigerant does not flow into the outdoor third pipe (o3).

In the outdoor second pipe (o2), the second flow path (82) of the first outdoor expansion valve (14a) is on the upstream side, and the first flow path (81) of the first outdoor expansion valve (14a) is on the downstream side. Therefore, the high-pressure refrigerant flows through the second flow path (82) and first flow path (81) of the first outdoor expansion valve (14a) in this order.

In the first refrigeration cycle, the high-pressure refrigerant flows through the indoor first pipe (I1) of the indoor parallel circuit (IP). Since the ninth check valve (CV9) closes the indoor second pipe (I2), the high-pressure refrigerant does not flow into the indoor second pipe (I2). In the indoor first pipe (I1), the second flow path (82) of the first indoor expansion valve (63a) is on the upstream side, and the first flow path (81) of the first indoor expansion valve (63a) is on the downstream side. Therefore, the high-pressure refrigerant flows through the second flow path (82) and first flow path (81) of the first indoor expansion valve (63a) in this order.

In the first refrigeration cycle, there is substantially no possibility that the high-pressure refrigerant flows through the first flow path (81) and second flow path (82) of each of the first outdoor expansion valve (14a) and the first indoor expansion valve (63a) in this order. This configuration therefore avoids a situation in which the pressure of the high-pressure refrigerant acts on the needle valve (80) to push up the distal end (95b) of the needle valve (80), and prevents malfunctions in the first outdoor expansion valve (14a) and the first indoor expansion valve (63a).

The second refrigeration cycle is achieved during the heating operation and the heating and cooling-facility operation. In the second refrigeration cycle, the high-pressure refrigerant flows through the indoor second pipe (I2) of the indoor parallel circuit (IP). Since the eighth check valve (CV8) closes the indoor first pipe (I1), the high-pressure refrigerant does not flow into the indoor first pipe (I1).

In the indoor second pipe (I2), the second flow path (82) of the second indoor expansion valve (63b) is on the upstream side, and the first flow path (81) of the second indoor expansion valve (63b) is on the downstream side. Therefore, the high-pressure refrigerant flows through the second flow path (82) and first flow path (81) of the second indoor expansion valve (63b) in this order.

In the second refrigeration cycle, the high-pressure refrigerant flows through the outdoor third pipe (o3) of the outdoor parallel circuit (OP). Since the fourth check valve (CV4) closes the outdoor second pipe (o2), the high-pressure refrigerant does not flow into the outdoor second pipe (o2).

In the outdoor third pipe (o3), the second flow path (82) of the second outdoor expansion valve (14b) is on the upstream side, and the first flow path (81) of the second outdoor expansion valve (14b) is on the downstream side. Therefore, the high-pressure refrigerant flows through the second flow path (82) and first flow path (81) of the second outdoor expansion valve (14b) in this order.

In the second refrigeration cycle, there is substantially no possibility that the high-pressure refrigerant flows through the first flow path (81) and second flow path (82) of each of the second outdoor expansion valve (14b) and the second indoor expansion valve (63b) in this order. This configuration therefore avoids a situation in which the pressure of the high-pressure refrigerant acts on the needle valve (80) to push up the distal end (95b) of the needle valve (80), and prevents malfunctions in the second outdoor expansion valve (14b) and the second indoor expansion valve (63b).

During the heating and cooling-facility heat recovery operation, as illustrated in FIG. 8, the high-pressure refrigerant flows through the indoor second pipe (I2). During the heating and cooling-facility heat recovery operation, therefore, the high-pressure refrigerant flows through the second flow path (82) and first flow path (81) of the second indoor expansion valve (63b) in this order.

During the heating and cooling-facility waste heat operation, as illustrated in FIG. 9, the high-pressure refrigerant flows through the indoor second pipe (I2) and the outdoor second pipe (o2). During the heating and cooling-facility waste heat operation, therefore, the high-pressure refrigerant flows through the second flow path (82) and first flow path (81) of each of the second indoor expansion valve (63b) and the first outdoor expansion valve (14a) in this order.

### -Advantageous Effects of Embodiment-

The first embodiment is directed to the refrigeration apparatus-use unit (the outdoor unit (10), the indoor unit (60)) for the refrigeration apparatus (1) including the refrigerant circuit (6) including the compression unit (C), the utilization-side heat exchanger (64), and the heat source-side heat exchanger (13), the refrigerant circuit (6) being configured to perform the refrigeration cycle in which a pressure above the critical pressure is applied to the refrigerant. The refrigeration apparatus-use unit (the outdoor unit (10), the indoor unit (60)) includes the high-pressure flow path (I1, I2, O2, O3) through which the high-pressure refrigerant in the refrigerant circuit (6) flows, and the expansion valve (14a, 14b, 63a, 63b) connected to the high-pressure flow path (I1, I2, O2, O3, 48). The expansion valve (14a, 14b, 63a, 63b) includes the needle valve (80), the first flow path (81) located opposite the distal end (80a) of the needle valve (80), the driver (85) configured to move the needle valve (80) between the first position where the distal end (80a) of the needle valve (80) closes the first flow path (81) and the second position where the distal end (80a) of the needle valve (80) opens the first flow path (81), and the second flow path (82) configured to communicate with the first flow path (81) when the needle valve (80) is at the second position. The high-pressure flow path (I1, I2, O2, O3) causes the high-pressure refrigerant to always flow through the second flow path (82) and first flow path (81) of the expansion valve (14a, 14b, 63a, 63b) in this order.

This configuration reliably avoids a situation in which the high-pressure refrigerant acts on the needle valve (80) to push up the distal end (80a) of the needle valve (80) toward the open side. This configuration therefore avoids a malfunction in the expansion valve (14a, 14b, 63a, 63b) and ensures the reliability of the refrigeration apparatus (1).

According to the first embodiment, the check valve (CV4, CV5, CV8, CV9) (the regulation mechanism) permits the refrigerant to flow through the second flow path (82) and first flow path (81) of the expansion valve (14a, 14b, 63a, 63b) in this order and prohibits the refrigerant from flowing through the first flow path (81) and the second flow path (82) in this order.

This configuration reliably avoids a situation in which the refrigerant flows through the first flow path (81) and second flow path (82) of the expansion valve (14a, 14b, 63a, 63b) in this order.

According to the first embodiment, the refrigerant circuit (6) switches between the first refrigeration cycle in which the outdoor heat exchanger (13) serves as a radiator and the indoor heat exchanger (64) serves as an evaporator and the second refrigeration cycle in which the indoor heat exchanger (64) serves as a radiator and the outdoor heat exchanger (13) serves as an evaporator. The refrigerant circuit (6) includes the parallel circuit (IP, OP) constituted of the first high-pressure flow path (I1, O2) and the second high-pressure flow path (I2, O3) that are connected in parallel. Each of the first high-pressure flow path (I1, O2) and the second high-pressure flow path (I2, O3) is connected to the expansion valve (14a, 14b, 63a, 63b) and the check valve (CV4, CV5, CV8, CV9) (the regulation mechanism). The parallel circuit (IP, OP) causes the refrigerant to flow through the first high-pressure flow path (I1, O2) and the refrigerant to flow through the second high-pressure flow path (I2, O3) in opposite directions.

This configuration reliably avoids a situation in which the refrigerant flows through the first flow path (81) and second flow path (82) of each expansion valve (14a, 14b, 63a, 63b) in this order in both the first refrigeration cycle and the second refrigeration cycle. This configuration therefore improves the reliability of the refrigeration apparatus (1) that switches between the cooling operation and the heating operation.

### <<Other Embodiments>>

The refrigeration apparatus (1) according to the first embodiment is the air conditioning apparatus including the indoor unit (60) and the cooling facility unit (50). The air conditioning apparatus may be of a multiple type that includes multiple indoor units or may be of a pair type that includes one indoor unit and one outdoor unit in a pair. In the air conditioning apparatus, at least one indoor unit may carry out the cooling operation and another indoor unit may carry out the heating operation.

In addition, the air conditioning apparatus may include, instead of the cooling facility unit (50), a hot cabinet configured to heat inside air. The hot cabinet includes a heating heat exchanger configured to heat inside air. In the refrigeration apparatus (1), the indoor heat exchanger (64) cools or heats indoor air, while the heating heat exchanger heats inside air.

Only one of the indoor unit (60) and the outdoor unit (10) may include the high-pressure flow path.

The expansion valve may be of a thermostatic type. The electronic expansion valve may alternatively be of a linear electromagnetic drive type, a pulse electromagnetic drive type, a bimetal type, or the like.

The compression unit (C) may be a multistage compressor that includes a motor, one drive shaft coupled to the motor, and two or more compression mechanisms each coupled to the drive shaft.

The utilization-side heat exchanger is not necessarily an air heat exchanger. The indoor heat exchanger (64) according to the first embodiment may be a heat exchanger configured to perform heat exchange with water or any heat medium. In this configuration, the heat exchanger serves as an evaporator to cool water or any heat medium. Alternatively, the heat exchanger serves as a radiator to heat water or any heat medium.

While the embodiments and modifications have been described herein above, it is to be appreciated that various changes in form and detail may be made without departing from the scope of the claims. The foregoing ordinal numbers such as "first", "second", and "third" are merely used for distinguishing the elements designated with the ordinal numbers, and are not intended to limit the number and order of the elements.

### INDUSTRIAL APPLICABILITY

As described above, the present disclosure is applicable to a refrigeration apparatus-use unit, a heat source unit, a utilization unit, and a refrigeration apparatus.

### REFERENCE SIGNS LIST

1: refrigeration apparatus
6: refrigerant circuit
10: outdoor unit (heat source unit, refrigeration apparatus-use unit)
13: outdoor heat exchanger (heat source-side heat exchanger)
14a: first outdoor expansion valve (expansion valve, valve mechanism)
14b: second outdoor expansion valve (expansion valve, valve mechanism)
48: pressure equalization pipe (high-pressure flow path)
60: indoor unit (utilization unit, refrigeration apparatus-use unit)
63a: first indoor expansion valve (expansion valve, valve mechanism)
63b: second indoor expansion valve (expansion valve, valve mechanism)
64: indoor heat exchanger (utilization-side heat exchanger)
80: needle valve (valve body)
80a: distal end
81: first flow path
82: second flow path
85: driver
CV4: fourth check valve (regulation mechanism)
CV5: fifth check valve (regulation mechanism)
CV8: eighth check valve (regulation mechanism)
CV9: ninth check valve (regulation mechanism)
IP: indoor parallel circuit (parallel circuit)
I1: indoor first pipe (first high-pressure flow path)
I2: indoor second pipe (second high-pressure flow path)
OP: outdoor parallel circuit (parallel circuit)
O2: outdoor second pipe (first high-pressure flow path)
O3: outdoor third pipe (second high-pressure flow path)

## Claims

1. A refrigeration apparatus comprising
a refrigerant circuit (6) including a compression unit (C), a utilization-side heat exchanger (64), and a heat source-side heat exchanger (13), the refrigerant circuit (6) being configured to perform the refrigeration cycle in which a pressure above the critical pressure is applied to the refrigerant, and
a refrigeration apparatus-use unit comprising:
at least one high-pressure flow path (I1, I2, O2, O3) through which the high-pressure refrigerant in the refrigerant circuit (6) flows; and
a valve mechanism (14a, 14b, 63a, 63b) connected to the high-pressure flow path (I1, I2, O2, O3), the valve mechanism (14a, 14b, 63a, 63b) comprising an expansion valve,
wherein
the valve mechanism (14a, 14b, 63a, 63b) includes:
a valve body (80); the valve body (80) being a needle valve and extending in an axial direction,
a first flow path (81) axially located opposite a distal end (80a) of the valve body (80);
a driver (85) configured to move the valve body (80) to a first position where the distal end (80a) of the valve body (80) closes the first flow path (81) and a second position where the distal end (80a) of the valve body (80) opens the first flow path (81); and
a second flow path (82) configured to communicate with the first flow path (81) when the valve body (80) is at the second position,
the high-pressure flow path (I1, I2, O2, O3) includes a regulation mechanism (CV4, CV5, CV8, CV9) configured to permit the refrigerant to flow through the second flow path (82) and first flow path (81) of the valve mechanism (14a, 14b, 63a, 63b) in this order and to prohibit the refrigerant from flowing through the first flow path (81) and the second flow path (82) in this order.
the regulation mechanism comprises a check valve (CV4, CV5, CV8, CV9),
the valve mechanism (14a, 14b, 63a, 63b) and the regulation mechanism (CV4, CV5, CV8, CV9) are connected in this order from the upstream side toward the downstream side, and
the refrigerant in the refrigerant circuit (6) comprises carbon dioxide,
wherein:
the high-pressure flow path (I1, I2, O2, O3) causes the high-pressure refrigerant to always flow through the second flow path (82) and first flow path (81) of the valve mechanism (14a, 14b, 63a, 63b) in this order, and wherein
the refrigerant circuit (6) includes a switching unit (TV1, TV2) configured to switch to a first refrigeration cycle in which the heat source-side heat exchanger (13) serves as a radiator and the utilization-side heat exchanger (64) serves as an evaporator and a second refrigeration cycle in which the utilization-side heat exchanger (64) serves as a radiator and the heat source-side heat exchanger (13) serves as an evaporator,
the at least one high-pressure flow path (I1, I2, O2, O3) comprises two high-pressure flow paths (I1, I2, O2, O3),
the two high-pressure flow paths (I1, I2, O2, O3) are connected in parallel to constitute a parallel circuit (IP, OP),
each of the high-pressure flow paths (I1, I2, O2, O3) including the valve mechanism (14a, 14b, 63a, 63b) and the regulation mechanism (CV4, CV5, CV8, CV9) connected in this order from the upstream side toward the downstream side, and
the parallel circuit (IP, OP) causes the refrigerant to flow through one of the high-pressure flow paths (I1, I2, O2, O3) and the refrigerant to flow through the other high-pressure flow path (I1, I2, O2, O3) in opposite directions.

2. A refrigeration apparatus according to claim 1, wherein the refrigeration apparatus-use unit is a heat source unit.

3. A refrigeration apparatus according to claim 1, wherein the refrigeration apparatus-use unit is a utilization unit.

## Patentansprüche

1. Kühlgerät, umfassend
einen Kühlmittelkreislauf (6), der eine Kompressionseinheit (C), einen nutzungsseitigen Wärmetauscher (64) und einen wärmequellenseitigen Wärmetauscher (13) einschließt, wobei der Kühlmittelkreislauf (6) so konfiguriert ist, dass er den Kühlkreislauf durchführt, in dem ein Druck über dem kritischen Druck auf das Kühlmittel ausgeübt wird, und
eine Kühlgerät-Nutzungseinheit, umfassend:
mindestens einen Hochdruckströmungsweg (I1, I2, O2, O3), durch den das Hochdruckkühlmittel in dem Kühlmittelkreislauf (6) strömt; und
einen Ventilmechanismus (14a, 14b, 63a, 63b), der mit dem Hochdruckströmungsweg (I1, I2, O2, O3) verbunden ist, wobei der Ventilmechanismus (14a, 14b, 63a, 63b) ein Expansionsventil umfasst, wobei
der Ventilmechanismus (14a, 14b, 63a, 63b) einschließt:
einen Ventilkörper (80); wobei der Ventilkörper (80) ein Nadelventil ist und sich in einer axialen Richtung erstreckt,
einen ersten Strömungsweg (81), der axial gegenüber einem distalen Ende (80a) des Ventilkörpers (80) angeordnet ist;
einen Antrieb (85), der so konfiguriert ist, dass er den Ventilkörper (80) in eine erste Position, in der das distale Ende (80a) des Ventilkörpers (80) den ersten Strömungsweg (81) verschließt, und in eine zweite Position, in der das distale Ende (80a) des Ventilkörpers (80) den ersten Strömungsweg (81) öffnet, bewegt; und
einen zweiten Strömungsweg (82), der so konfiguriert ist, dass er mit dem ersten Strömungsweg (81) in Verbindung steht, wenn sich der Ventilkörper (80) in der zweiten Position befindet,
der Hochdruckströmungsweg (I1, I2, O2, O3) einen Regelmechanismus (CV4, CV5, CV8, CV9) einschließt, der so konfiguriert ist, dass er dem Kühlmittel erlaubt, durch den zweiten Strömungsweg (82) und den ersten Strömungsweg (81) des Ventilmechanismus (14a, 14b, 63a, 63b) in dieser Reihenfolge zu strömen, und dass er verhindert, dass das Kühlmittel durch den ersten Strömungsweg (81) und den zweiten Strömungsweg (82) in dieser Reihenfolge strömt.
der Regelmechanismus ein Rückschlagventil (CV4, CV5, CV8, CV9) umfasst,
der Ventilmechanismus (14a, 14b, 63a, 63b) und der Regelmechanismus (CV4, CV5, CV8, CV9) in dieser Reihenfolge von der stromaufwärts gelegenen Seite zu der stromabwärts gelegenen Seite verbunden sind, und
das Kühlmittel in dem Kühlmittelkreislauf (6) Kohlendioxid umfasst,
wobei
der Hochdruckströmungsweg (I1, I2, O2, O3) bewirkt, dass das Hochdruckkühlmittel immer durch den zweiten Strömungsweg (82) und den ersten Strömungsweg (81) des Ventilmechanismus (14a, 14b, 63a, 63b) in dieser Reihenfolge strömt, und wobei
der Kühlmittelkreislauf (6) eine Schalteinheit (TV1, TV2) einschließt, die so konfiguriert ist, dass sie auf einen ersten Kühlkreislauf, in dem der wärmequellenseitige Wärmetauscher (13) als ein Radiator dient und der nutzungsseitige Wärmetauscher (64) als ein Verdampfer dient, und einen zweiten Kühlkreislauf, in dem der nutzungsseitige Wärmetauscher (64) als ein Radiator dient und der wärmequellenseitige Wärmetauscher (13) als ein Verdampfer dient, umschaltet,
der mindestens eine Hochdruckströmungsweg (I1, I2, O2, O3) zwei Hochdruckströmungswege (I1, I2, O2, O3) umfasst,
die beiden Hochdruckströmungswege (I1, I2, O2, O3) parallel geschaltet sind, um eine Parallelschaltung (IP, OP) zu bilden,
jeder der Hochdruckströmungswege (I1, I2, O2, O3) einschließlich des Ventilmechanismus (14a, 14b, 63a, 63b) und des Regelmechanismus (CV4, CV5, CV8, CV9) in dieser Reihenfolge von der stromaufwärts gelegenen Seite zu der stromabwärts gelegenen Seite verbunden ist, und
die Parallelschaltung (IP, OP) bewirkt, dass das Kühlmittel durch einen der Hochdruckströmungswege (I1, I2, O2, O3) strömt und das Kühlmittel durch den anderen Hochdruckströmungsweg (I1, I2, O2, O3) in entgegengesetzten Richtungen strömt.

2. Kühlgerät nach Anspruch 1, wobei die Kühlgerät-Nutzungseinheit eine Wärmequelleneinheit ist.

3. Kühlgerät nach Anspruch 1, wobei die Kühlgerät-Nutzungseinheit eine Nutzungseinheit ist.

## Revendications

1. Appareil de réfrigération comprenant
un circuit (6) de fluide frigorigène incluant une unité de compression (C), un échangeur de chaleur (64) côté utilisation, et un échangeur de chaleur (13) côté source de chaleur, le circuit (6) de fluide frigorigène étant configuré pour mettre en oeuvre le cycle de réfrigération dans lequel une pression au-dessus de la pression critique est appliquée au fluide frigorigène, et
une unité à usage pour appareil de réfrigération comprenant :
au moins un trajet d'écoulement haute pression (I1, I2, O2, O3) à travers lequel le fluide frigorigène haute pression dans le circuit (6) de fluide frigorigène s'écoule ; et
un mécanisme de soupape (14a, 14b, 63a, 63b) raccordé au trajet d'écoulement haute pression (I1, I2, O2, 03), le mécanisme de soupape (14a, 14b, 63a, 63b) comprenant un détendeur, dans lequel
le mécanisme de soupape (14a, 14b, 63a, 63b) inclut :
un corps de soupape (80) ; le corps de soupape (80) étant une soupape à pointeau et s'étendant dans une direction axiale,
un premier trajet d'écoulement (81) situé axialement à l'opposé d'une extrémité distale (80a) du corps de soupape (80) ;
un dispositif d'entraînement (85) configuré pour déplacer le corps de soupape (80) vers une première position dans laquelle l'extrémité distale (80a) du corps de soupape (80) ferme le premier trajet d'écoulement (81) et une deuxième position dans laquelle l'extrémité distale (80a) du corps de soupape (80) ouvre le premier trajet d'écoulement (81) ; et
un deuxième trajet d'écoulement (82) configuré pour communiquer avec le premier trajet d'écoulement (81) lorsque le corps de soupape (80) est à la deuxième position,
le trajet d'écoulement haute pression (I1, I2, O2, O3) inclut un mécanisme de régulation (CV4, CV5, CV8, CV9) configuré pour permettre au fluide frigorigène de s'écouler à travers le deuxième trajet d'écoulement (82) et le premier trajet d'écoulement (81) du mécanisme de soupape (14a, 14b, 63a, 63b), dans cet ordre, et pour empêcher le fluide frigorigène de s'écouler à travers le premier trajet d'écoulement (81) et le deuxième trajet d'écoulement (82), dans cet ordre.
le mécanisme de régulation comprend un clapet anti-retour (CV4, CV5, CV8, CV9),
le mécanisme de soupape (14a, 14b, 63a, 63b) et le mécanisme de régulation (CV4, CV5, CV8, CV9) sont raccordés, dans cet ordre, du côté amont au côté aval, et
le fluide frigorigène dans le circuit (6) de fluide frigorigène comprend du dioxyde de carbone,
dans lequel
le trajet d'écoulement haute pression (I1, I2, O2, O3) amène le fluide frigorigène haute pression à toujours s'écouler à travers le deuxième trajet d'écoulement (82) et le premier trajet d'écoulement (81) du mécanisme de soupape (14a, 14b, 63a, 63b), dans cet ordre, et dans lequel
le circuit (6) de fluide frigorigène inclut une unité de commutation (TV1, TV2) configurée pour passer à un premier cycle de réfrigération dans lequel l'échangeur de chaleur (13) côté source de chaleur sert de radiateur et l'échangeur de chaleur (64) côté utilisation sert d'évaporateur et un deuxième cycle de réfrigération dans lequel l'échangeur de chaleur (64) côté utilisation sert de radiateur et l'échangeur de chaleur (13) côté source de chaleur sert d'évaporateur,
l'au moins un trajet d'écoulement haute pression (I1, I2, O2, O3) comprend deux trajets d'écoulement haute pression (I1, I2, O2, O3),
les deux trajets d'écoulement haute pression (I1, I2, O2, O3) sont raccordés en parallèle pour constituer un circuit parallèle (IP, OP),
chacun des trajets d'écoulement haute pression (I1, I2, O2, O3) incluant le mécanisme de soupape (14a, 14b, 63a, 63b) et le mécanisme de régulation (CV4, CV5, CV8, CV9), raccordés dans cet ordre du côté aval au côté amont, et
le circuit parallèle (IP, OP) amène le fluide frigorigène à s'écouler à travers l'un des trajets d'écoulement haute pression (I1, I2, O2, O3) et le fluide frigorigène à s'écouler à travers l'autre trajet d'écoulement haute pression (I1, I2, O2, O3) dans des directions opposées.

2. Appareil de réfrigération selon la revendication 1, dans lequel l'unité à usage pour appareil de réfrigération est une unité source de chaleur.

3. Appareil de réfrigération selon la revendication 1, dans lequel l'unité à usage pour appareil de réfrigération est une unité d'utilisation.
